# EUROPÄISCHE PATENTSCHRIFT

(11) **EP 0 771 978 B1**
(45) Veröffentlichungstag und Bekanntmachung des Hinweises auf die Patenterteilung: **19.12.2001**
(21) Anmeldenummer: 96116210.4
(22) Anmeldetag: 10.10.1996
(51) Int. Cl.: F16K 11/048, F24D 3/08, F24D 19/10

(54) **Heizgerät mit einem Umsteuerventil**
Heating device with a reversible valve
Appareil de chauffage avec une valve d'inversion

(30) Priorität: 02.11.1995 DE 19540816
(43) Veröffentlichungstag der Anmeldung: 07.05.1997
(73) Patentinhaber: ROBERT BOSCH GMBH, 70442 Stuttgart (DE)
(72) Erfinder: Prestle, Thomas, 72622 Nürtingen (DE); Oehrlein, Manfred, 73249 Wernau (DE)
(74) Vertreter: Röser, Peter, Dipl.-Ing.

(56) Entgegenhaltungen:
- EP-A- 0 427 121
- EP-A- 0 466 010
- DE-C- 242 681
- DE-U- 7 235 386
- DE-U- 9 409 782
- FR-A- 1 020 134

## Beschreibung

### Stand der Technik

Die Erfindung betrifft ein Heizgerät mit einem Umsteuerventil nach dem Oberbegriff des unabhängigen Anspruch 1. Derartige Heizgeräte werden eingesetzt, wenn mehrere Heizkreise von einem Heizgerät versorgt werden, wobei die Heizkreise üblicherweise mit unterschiedlichen Vorlauftemperaturen betrieben werden. Typische Heizkreise hierfür sind die Raumheizung und die Brauchwasserbereitstellung mit einem indirekt beheizten Speicher oder einem Wärmetauscher im Durchlauferhitzerprinzip. Bekannte Heizgeräte beinhalten Umsteuerventile, die einen Verschlußkörper aufweisen, der mittels eines Betätigungsorgans zwischen zwei Schließstellungen hin und her bewegbar ist. In jeder Schließstellung ist ein Eingang gesperrt und ein weiterer Eingang mit einem Ausgang des Umsteuerventils verbunden. Dabei wird durch den Druck im gesperrten Eingang das Verschlußglied in Öffnungsrichtung belastet. Hierbei ist unbefriedigend, daß eine hohe Schließkraft benötigt wird, die außerdem vom Pumpendruck abhängt.

Ein derartiges Heizgerät ist aus dem Dokument DE 9 409 782 bekannt.

### Vorteile der Erfindung

Das erfindungsgemäße Heizgerät mit seinem Umsteuerventil mit den Merkmalen des Hauptanspruchs hat den Vorteil, daß die am Verschlußkörper des Ventilglieds anliegenden Drücke das sperrende Verschlußglied in Richtung auf den Ventilsitz belastet. Das Betätigungsorgan muß deshalb nur während des Bewegens des Ventilglieds eine hohe Kraft aufbringen.

Durch die in den Unteransprüchen angegebenen Maßnahmen sind vorteilhafte Weiterbildungen des Heizgerätes nach dem Hauptanspruch möglich. Eine besonders einfache Ausführung ergibt sich, wenn die Verschlußkörper tellerförmig ausgestaltet und über eine Stange fest miteinander verbunden sind. Die Verschiebebewegung kann dann parallel zur Stange linear oder kreisförmig erfolgen. Eine weitere Vereinfachung ergibt sich, wenn die Verschlußkörper parallel zueinander ausgerichtet sind und die die Verschlußkörper verbindende Stange auch mit dem Betätigungsorgan verbunden ist. Diese Anordnung läßt sich einfach montieren und justieren.

In vorteilhafterweise ist das Ventilglied elektromagnetisch betätigbar. Dies kann einfach durch die nach außen verlängerte die Verschlußkörper verbindende Stange erfolgen. Durch das Federbelasten des Ventilglieds kann eine definierte Nullstellung vorgegeben werden.

Das Umsteuerventil ergänzt in vorteilhafterweise das erfindungsgemäße Heizgerät, wenn die Eingänge des Umsteuerventils mit Rückläufen der Heizkreise und der Ausgang des Umsteuerventils mit dem Wärmeübertrager des Heizgerätes verbunden ist. Eine das Heizwasser fördernde Pumpe ist in Strömungsrichtung gesehen hinter dem Ausgang des Umsteuerventils angeordnet. Damit ist erreicht, daß auf den Verschlußkörper lediglich die um die in den Wärmeübertragern und Heizkreisen abfallenden Druckverluste verminderten Drücke wirken. Dies schont insbesondere die Dichtung innerhalb der Ventilsitze. Ist die Pumpe während des Umschaltvorganges ausgeschaltet, sind die vom Betätigungsorgan aufzuwendenden Kräfte gering, da das Ventilglied nicht gegen den Pumpendruck verschoben werden muß.

### Zeichnung

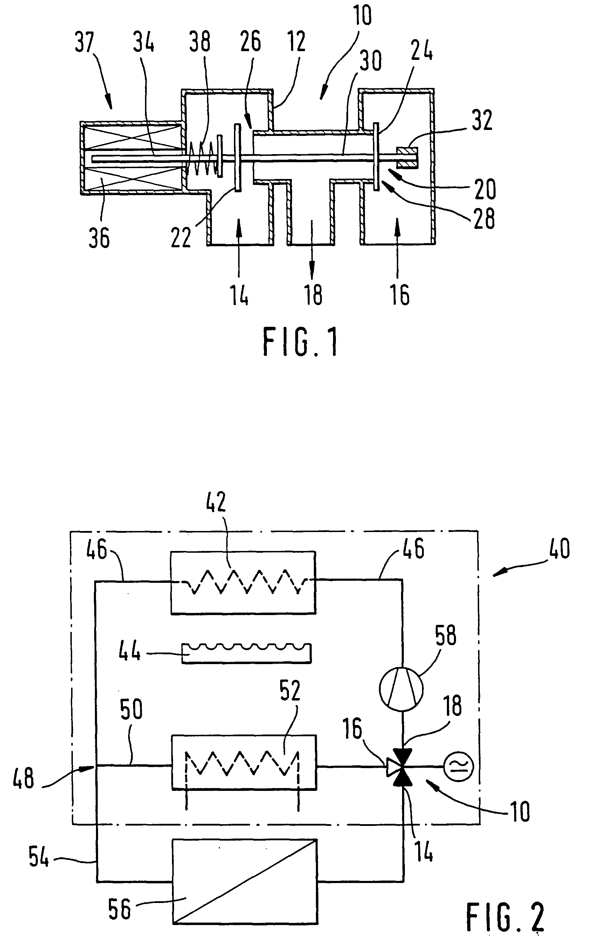

In der Zeichnung ist ein Ausführungsbeispiel dargestellt und in der nachfolgenden Beschreibung näher erläutert. Es zeigen Figur 1 schematisch ein Umsteuerventil und Figur 2 schematisch ein Heizgerät.

### Beschreibung

In Figur 1 ist ein Umsteuerventil 10 dargestellt mit einem Gehäuse 12, das drei Anschlüsse 14, 16 und 18 aufweist. Innerhalb des Gehäuses 12 ist ein Ventilglied 20 angeordnet, das zwei Verschlußkörper 22 und 24 aufweist, wobei der Verschlußkörper 22 mit einem Ventilsitz 26 und der Verschlußkörper 24 mit einem Ventilsitz 28 korrespondiert.

Die beiden Verschlußkörper 22 und 24 sind parallel zueinander ausgerichtet und über eine Stange 30 miteinander verbunden. Die Stange 30 ist auf der Seite des Verschlußkörpers (24) in einem Lager (32) verschiebbeweglich gehalten und auf der Seite des Verschlußkörpers 22 auf der dem Verschlußkörper 24 gegenüberliegenden Seite verlängert. Die Verlängerung 34 der Stange 30 ragt in eine Spule 36, die seitlich am Gehäuse 12 befestigt ist. Zwischen der Spule 36 und dem Verschlußkörper 22 ist eine Feder 38 eingebracht.

Die verlängerte Stange 30, die Spule 36 und die Feder 38 bilden zusammen ein Betätigungsorgan 37.

Der Abstand der Verschlußkörper 22 und 24 voneinander ist größer als der Abstand der Ventilsitze 26 und 28 zueinander. Auf diese Weise kann immer nur ein Verschlußkörper 22 oder 24 auf dem mit ihm korrespondierenden Ventilsitz 26 oder 28 aufliegen.

In Figur 2 ist ein Heizgerät 40 dargestellt, mit einem Wärmeübertrager 42, der von einer Energiequelle 44 mit Wärme versorgt wird. Durch das Heizgerät 40 führt ein inneres Rohrleitungssystem 46, innerhalb dem auch der Wärmeübertrager 42 angeordnet ist. Das Rohrleitungssystem 46 weist einen Abzweig 48 auf, von dem ein erster Rohrleitungsstrang 50 zu einem Heizgerät 40 angeordneten Wärmeübertragersystem 52 und von dort zum Umsteuerventil 10 führt. Ein zweiter Rohrleitungsstrang 54 verläßt das Heizgerät und führt zu einem schematisch dargestellten Heizkreis 56, von dort zurück zum Heizgerät 40 und ebenfalls zum Umsteuerventil 10. Das Wärmeübertragersystem 52 dient vorzugsweise zur Brauchwasserbereitung und der Heizkreis 56 der Raumheizung.

Im Heizgerät 40 ist ferner eine das Heizwasser fördernde Pumpe 58 in das innere Rohrleitungssystem 46 eingebunden. Die Pumpe 58 liegt zwischen dem Umsteuerventil 10 und dem Wärmeübertrager 42. Der Anschluß 14 des Umsteuerventils 10 ist mit dem Heizkreis 56, der Anschluß 16 mit dem Wärmeübertragersystem 52 und der Anschluß 18 mit dem Eingang der Pumpe 58 verbunden.

Umsteuerventil 10 und Heizgerät 40 arbeiten wie folgt:

Während des Betriebs des Heizgeräts 40 wird über den Wärmeübertrager 42 Wärmeenergie auf ein Heizmedium übertragen und bei laufender Pumpe 58 über das Rohrleitungssystem 46 umgepumpt. In der in Figur 1 gezeigten Stellung fließt das Heizmedium in den Rohrleitungsstrang 54 und durch den Heizkreis 56 zum Anschluß 14 des Umsteuerventils 10. Der Verschlußkörper 22 ist vom Ventilsitz 26 abgehoben, so daß das Heizmedium vom Anschluß 14 zum Anschluß 18 strömen kann. Von dort gelangt das Heizmedium zum Eingang der Pumpe 48 und der Kreislauf ist geschlossen. Der von der Pumpe 58 erzeugte Druck setzt sich im Rohrleitungsstrang 50 durch das Wärmeübertragersystem 52 bis zum Anschluß 16 des Umsteuerventils 10 fort. Da der Verschlußkörper 24 auf dem Ventilsitz 28 aufliegt herrscht auf der Anschlußseite 16 des Verschlußkörpers 24 der volle Druck der Pumpe 58 vermindert um den Druckverlust innerhalb des Wärmeübertragers 42. Auf der gegenüberliegenden Seite herscht der Pumpendruck vermindert um den Druckverlust innerhalb des Wärmeübertragers 42, weiter vermindert um den Druckverlust innerhalb des Heizkreises 56 und weiter vermindert durch den durch die Geschwindigkeit des Heizmediums erzeugten Staudruck. Der Verschlußkörper 24 wird folglich durch die auf ihn herrschende Druckdifferenz auf den Ventilsitz 28 gepreßt.

Wird Wärmeenergie im Wärmeübertragersystem 52 benötigt, wird die elektrische Spule 36 deaktiviert und die Verlängerung 34 der Stange 30 nicht mehr in der Spule 36 gehalten und nur durch die Feder aus der Spule 36 herausgezogen. Der Verschlußkörper 24 hebt sich vom Ventilsitz 28 ab und der Verschlußkörper 22 legt sich auf den Ventilsitz 26 auf. Damit ist die Durchgangsrichtung vom Anschluß 14 zum Anschluß 18 gesperrt und der Durchgang vom Anschluß 16 auf den Anschluß 18 geöffnet. Das Heizungsmedium strömt somit durch das Wärmeübertragersystem 52. Bei laufender Pumpe 58 wird durch die herrschenden Druckverhätnisse der Verschlußkörper 22 auf den Ventilsitz 26 gepreßt.

Bei günstiger Druckverhältnissen ist eine zusätzliche Kraft zur Abdichtung des gesperrten Ventilsitzes nicht notwendig.

Wird vor Beginn eines Umschaltvorganges des Umschaltventils 10 die Pumpe 58 abgeschaltet, sind nur sehr geringe Bewegungskräfte, die hauptsächlich durch die Feder 38 und die Reibungskräfte innerhalb des Lagers 30 bedingt sind, vom Betätigungsorgan 37 aufzubringen. Dieses kann dann entsprechend kleiner ausgelegt sein.

Sofern es aufgrund der Pumpen oder Heiznetzauslegung zweckmäßig ist, kann die Pumpe auch während des Umschaltens mit reduzierter Leistung betrieben werden.

Statt einer Feder 38 ist es möglich, ein Magnetsystem zu verwenden. An der Spule 36 und der Stange 30 müßten dann zwei sich gegenseitig abstoßende Magnete befestigt sein.

## Patentansprüche

1. Heizgerät, insbesondere für die Erwärmung von Brauchwasser und die Raumheizung, mit einem ersten Heizkreis und einem zweiten Heizkreis sowie mit einer Pumpe (58) für ein Heizmedium und einem Umsteuerventil (10), das das Heizmedium zwischen den Heizkreisen umschaltet, wobei das Umsteuerventil (10) einen ersten und einen zweiten Eingang (14, 16) sowie einen Ausgang (18) aufweist, und wobei die Pumpe (58) in Strömungsrichtung des Heizmediums gesehen nach dem Umsteuerventil (10) angeordnet ist, das Umsteuerventil (10) ein Ventilglied (20) mit zwei miteinander verbundenen Verschlußkörpern (22, 24), die jeder mit einem Ventilsitz (26, 28) zusammenwirken und eine Zwischenkammer, die mit dem Ausgang (18) verbunden ist, der wiederum an den strömungsseitigen Eingang der Pumpe (58) angeschlossen ist, aufweist und daß der erste Eingang (14) des Umsteuerventils (10) mit dem ersten Heizkreis und der zweite Eingang (16) des Umsteuerventils (10) mit dem zweiten Heizkreis derart verbunden ist, daß der jeweils geschlossene Eingang (14, 16) mit höherem Druck beaufschlagt ist als der mit der Zwischenkammer verbundene Ausgang (18), **dadurch gekennzeichnet, daß** die Zwischenkammer sich zwischen den beiden Verschlußkörpern befindet.

2. Heizgerät nach Anspruch 1, **dadurch gekennzeichnet, daß** die Verschlußkörper (22, 24) tellerförmig ausgestaltet und über eine Stange (30) oder dergleichen fest miteinander verbunden sind.

3. Heizgerät nach Anspruch 2, **dadurch gekennzeichnet, daß** die tellerförmigen Verschlußkörper (22, 24) parallel zueinander ausgerichtet sind und daß die Stange (30) mit dem Betätigungsorgan (37) verbunden ist.

4. Heizgerät nach Anspruch 1, **dadurch gekennzeichnet, daß** die Ventilsitze (26, 28) auf einander zugewandten Seiten der Verschlußkörper (22, 24) liegen und daß der Abstand der Verschlußkörper (22, 24) voneinander größer ist als der Abstand der Ventilsitze.

5. Heizgerät nach Anspruch 1, **dadurch gekennzeichnet, daß** das Ventilglied (20) elektromagnetisch betätigbar ist.

6. Heizgerät nach Anspruch 1, **dadurch gekennzeichnet, daß** das Ventilglied (20) federbelastet ist.

7. Heizgerät nach Anspruch 1, **dadurch gekennzeichnet, daß** die Pumpe (58) während eines Schaltvorgangs des Umsteuerventils (10) abgeschaltet oder mit reduzierter Leistung betrieben ist.

## Claims

1. Heating appliance, in particular for the heating of service water and for room heating, with a first heating circuit and a second heating circuit and with a pump (58) for a heating medium and a reversing valve (10) which changes over the heating medium between the heating circuits, the reversing valve (10) having a first and a second inlet (14, 16) and also an outlet (18), and the pump (58) being arranged downstream of the reversing valve (10), as seen in the direction of flow of the heating medium, the reversing valve (10) having a valve member (20) with two interconnected closing bodies (22, 24) which each co-operate with a valve seat (26, 28), and having an intermediate chamber connected to the outlet (18) which, in turn, is connected to the flow-side inlet of the pump (58), and the first inlet (14) of the reversing valve (10) being connected to the first heating circuit and the second inlet (16) of the reversing valve (10) to the second heating circuit, in such a way that the inlet (14, 16) closed in each case is subjected to higher pressure than the outlet (18) connected to the intermediate chamber, **characterized in that** the intermediate chamber is located between the two closing bodies.

2. Heating appliance according to Claim 1, **characterized in that** the closing bodies (22, 24) are designed in the form of a plate and are firmly connected to one another via a rod (30) or the like.

3. Heating appliance according to Claim 2, **characterized in that** the plate-shaped closing bodies (22, 24) are oriented parallel to one another, and **in that** the rod (30) is connected to the actuating member (37).

4. Heating appliance according to Claim 1, **characterized in that** the valve seats (26, 28) are located on mutually confronting sides of the closing bodies (22, 24), and **in that** the distance between the closing bodies (22, 24) is greater than the distance between the valve seats.

5. Heating appliance according to Claim 1, **characterized in that** the valve member (20) is capable of being actuated electromagnetically.

6. Heating appliance according to Claim 1, **characterized in that** the valve member (20) is spring-loaded.

7. Heating appliance according to Claim 1, **characterized in that** the pump (58) is switched off or operated with reduced power during an operation for switching the reversing valve (10).

## Revendications

1. Appareil de chauffage, en particulier pour le chauffage de pièces et d'eau chaude sanitaire, dans lequel :
- il est prévu un premier et un second circuit de chauffage, une pompe (58) de circulation d'un fluide thermique, une vanne d'inversion (10) pour commuter le fluide thermique entre les deux circuits de chauffage, cette vanne possédant une première et une seconde entrée (14, 16) ainsi qu'une sortie (18),
- la pompe (58), par rapport au sens d'écoulement du fluide thermique, est placée en aval de la vanne (10),
- la vanne d'inversion (10) possède un organe de soupape (20) ayant deux corps de fermeture (22, 24) reliés entre eux et coopérant chacun avec un siège de soupape (26, 28), ainsi qu'une chambre intermédiaire reliée à la sortie (18) elle-même raccordée à l'entrée de la pompe (58) par rapport au sens de l'écoulement,
- la vanne d'inversion (10) a sa première entrée (14) reliée au premier circuit de chauffage, tandis que la seconde entrée (16) est reliée au second circuit de chauffage, de sorte que l'entrée fermée (14, 16) est soumise à une pression plus élevée que la sortie (18) reliée à la chambre intermédiaire,
**caractérisé en ce que**
la chambre intermédiaire se trouve entre les deux corps de fermeture.

2. Appareil de chauffage selon la revendication 1,
**caractérisé en ce que**
les corps de fermeture (22, 24) ont la forme de disques rendus solidaires par une tige de liaison (30) ou similaire.

3. Appareil de chauffage selon la revendication 2,
**caractérisé en ce que**
les corps de fermeture (22, 24) en forme de disques sont parallèles, et la tige (30) est reliée à un organe de manoeuvre (37).

4. Appareil de chauffage selon la revendication 1,
**caractérisé en ce que**
les sièges de soupape (26, 28) s'appliquent sur les faces tournées l'une vers l'autre des corps de fermeture (22, 24), et la distance séparant les corps de fermeture (22, 24), est supérieure à celle séparant les sièges de soupape.

5. Appareil de chauffage selon la revendication 1,
**caractérisé en ce que**
l'organe de soupape (20) peut être actionné électromagnétiquement.

6. Appareil de chauffage selon la revendication 1,
**caractérisé en ce que**
l'organe de soupape (20) est sous contrainte élastique.

7. Appareil de chauffage selon la revendication 1,
**caractérisé en ce que**
pendant que la vanne d'inversion (10) s'inverse, la pompe (58) est coupée ou fonctionne à puissance réduite.
